# EUROPEAN PATENT APPLICATION

(11) **EP 3 086 314 A1**
(43) Date of publication of application: **26.10.2016**
(21) Application number: 14872575.7
(22) Date of filing: 17.12.2014
(51) Int. Cl.: G09G 5/10, H04N 9/69

(54) **GAMMA PARAMETER DETERMINING METHOD AND DEVICE, AND DISPLAYING METHOD AND DEVICE FOR DISPLAY**

(30) Priority: 18.12.2013 CN 201310698460
(71) Applicant: Kunshan New Flat Panel Display Technology Center Co., Ltd., KunShan City, Jiangsu 215300 (CN); Kunshan Go-Visionox Opto-Electronics Co., Ltd., KunShan City, Jiangsu 215300 (CN)
(72) Inventor: DING, Liwei, Kunshan Jiangsu 215300 (CN); HUANG, Xiuqi, Kunshan Jiangsu 215300 (CN); GAO, Xiaoyu, Kunshan Jiangsu 215300 (CN)
(74) Representative: D'Halleweyn, Nele Veerle Trees Gertrudis
(86) International application number: PCT/CN2014/094113
(87) International publication number: WO 2015/090208

(57) **Abstract**

The present invention relates to method and device for determining Gamma parameters and displaying method and device for a display. A method for determining Gamma parameters for a display includes: setting brightness of the display; lightening a standard image of gradient tricolor under the brightness; calibrating the displaying of the standard image of gradient tricolor with multiple different Gamma values; obtaining the optimal Gamma parameters for the tricolor based on the calibration results; and storing the optimal Gamma parameters for the tricolor corresponding to the brightness in a display chip. The method for determining Gamma parameters for a display calibrates the displaying of the standard image of gradient tricolor with multiple different Gamma values, which can obtain the optimal displaying results based on different calibration results. The optimal Gamma parameters for the tricolor corresponding to the brightness, which represent the optimal displaying results, are obtained based on the calibration results.

## Description

### TECHNICAL FIELD

The present invention relates to the field of display technology, and more particularly, to a method and device for determining Gamma parameters, and a displaying method and device for a display.

### BACKGROUND

Traditional liquid crystal display (LCD) screen bodies are widely applied in electronic products. In order to display, a LCD screen changes the twist angle of the liquid crystal and transmits the display lights from a backlight. The NTSC (National Television Standards Committee) color gamut of a LCD screen body is usually around 45%∼80%. The spectrum of light from the backlight has great impact on the NTSC color gamut of the LCD screen body. There is a conventional Gamma standard for a LCD screen body, such as Gamma=2.2 and Gamma=2.0. It leans to be a warm tone with a relatively lower color temperature in Asian regions, while it leans to be a cold tone with a relatively higher color temperature in European regions.

An active-matrix-organic-light-emitting diode (AMOLED) display screen can have a NTSC color gamut of up to 100% or more. The Gamma parameters of a LCD screen body cannot be applied to an AMOLED display screen body because of the intrinsic differences between them. Some AMOLED displays may display a NTSC color gamut of 100% or more without achieving better displaying results visually.

### SUMMARY OF THE INVENTION

It is necessary to provide method and device for determining Gamma parameters as well as displaying method and device for a display that may fully represent the high-quality image of the display body.

A method for determining Gamma parameters for a display is disclosed, which may include:
setting brightness of the display;
lightening a standard image of gradient tricolor under the brightness;
calibrating the displaying of the standard image of gradient tricolor with multiple different Gamma values;
obtaining the optimal Gamma parameters for the tricolor based on the calibration results; and
storing the optimal Gamma parameters for the tricolor corresponding to the brightness in a display chip.

In one of the embodiments, the standard image of gradient tricolor may be an image showing each color of red, green and blue as a strip having brightness from 0 to 255 in sequence.

In one of the embodiments, the step of lightening a standard image of gradient tricolor under the brightness may include:
determining the grayscale brightness of each pixel;
determining grayscale voltage based on the grayscale brightness;
conducting program compiling based on the grayscale voltage; and
lightening the standard image of gradient tricolor based on the program.

In one of the embodiments, the step of obtaining the optimal Gamma parameters for the tricolor based on the calibration results may include:
recording the number of invisible gradient lines in the standard image of gradient tricolor under each Gamma value; and
determining the optimal Gamma parameters for the tricolor based on a pre-set number of invisible gradient lines.

In one of the embodiments, the step of determining the optimal Gamma parameters for the tricolor based on a pre-set number of invisible gradient lines may be: setting the optimal Gamma parameters for the tricolor to be the Gamma values corresponding to the standard image of gradient tricolor in which the number of invisible gradient lines is equal to the pre-set number of invisible gradient lines.

In one of the embodiments, the display brightness may be set as 250cd/m², 300cd/m², 350cd/m², 400cd/m², and 450cd/m², respectively; the multiple different Gamma values may be set as 1.8, 1.9, 2.0, 2.1, 2.2, 2.3, 2.4, and 2.5 under each brightness, respectively; and, the pre-set number of invisible gradient lines may be 6.

In one of the embodiments, a device for determining Gamma parameters for a display is provided, which may include:
a brightness setting unit, configured to set the brightness of the display;
a unit for lightening a standard image of gradient tricolor, configured to lighten a standard image of gradient tricolor under the brightness;
a calibration unit, configured to calibrate the display of the standard image of gradient tricolor with multiple different Gamma values;
a unit for obtaining the optimal Gamma parameters, configured to obtain the optimal Gamma parameters for the tricolor corresponding to the brightness based on the calibration results; and
a unit for storing the optimal Gamma parameters, configured to store the optimal Gamma parameters for the tricolor corresponding to the brightness in a display chip.

In one of the embodiments, the standard image of gradient tricolor may be an image showing each color of red, green and blue as a strip having brightness from 0 to 255 in sequence.

In one of the embodiments, the unit for lightening a standard image of gradient tricolor may include:
a unit for determining grayscale brightness, configured to determine the grayscale brightness of each pixel;
a unit for determining grayscale voltage, configured to determine the grayscale voltage based on the grayscale brightness;
a program compiling unit, configured to conduct program compiling based on the grayscale voltage; and
a lightening unit, configured to lighten the standard image of gradient tricolor based on the program.

In one of the embodiments, the unit for obtaining the optimal Gamma parameters for the tricolor may include:
a unit for recording invisible gradient lines, configured to record the number of invisible gradient lines in the standard image of gradient tricolor under each Gamma value; and
a unit for determining the optimal Gamma parameters, configured to determine the optimal Gamma parameters for the tricolor based on a pre-set number of invisible gradient lines.

In one of the embodiments, the unit for determining the optimal Gamma parameters for the tricolor may set the optimal Gamma parameters for the tricolor to be the Gamma values corresponding to the standard image of gradient tricolor in which the number of invisible gradient lines is equal to the pre-set number of invisible gradient lines.

In one of the embodiments, a displaying method for a display is provided, which may include:
obtaining the brightness of the display;
obtaining the optimal Gamma parameters for the tricolor corresponding to the brightness from the display chip; and
calibrating the of the display based on the optimal Gamma parameters for the tricolor.

In one of the embodiments, the optimal Gamma parameters for the tricolor corresponding to the brightness may be determined based on the number of invisible gradient lines in the standard image of gradient tricolor.

In one of the embodiments, the step of determining the optimal Gamma parameters for the tricolor corresponding to the brightness based on the number of invisible gradient lines in the standard image of gradient tricolor may include:
lightening the standard image of gradient tricolor under the brightness;
calibrating the displaying of the standard image of gradient tricolor with multiple different Gamma values; and
obtaining the optimal Gamma parameters for the tricolor corresponding to the brightness based on the calibration results.

In one of the embodiments, the step of obtaining the optimal Gamma parameters for the tricolor corresponding to the brightness based on the calibration results may include:
recording the number of invisible gradient lines in the standard image of gradient tricolor under each Gamma value; and
determining the optimal Gamma parameters for the tricolor based on a pre-set number of invisible gradient lines.

In one of the embodiments, the step of determining the optimal Gamma parameters for the tricolor based on a pre-set number of invisible gradient lines may be: setting the optimal Gamma parameters for the tricolor to be the Gamma values for the tricolor corresponding to the standard image of gradient tricolor in which the number of invisible gradient lines is equal to the pre-set number of invisible gradient lines.

In one of the embodiments, a displaying device is provided, which may include:
a brightness obtaining unit, configured to obtain the brightness of the displaying device;
a unit for obtaining Gamma parameters, configured to obtain the optimal Gamma parameters for the tricolor corresponding to the brightness from the display chip; and
a displaying calibration unit, configured to calibrate the display of the displaying device based on the optimal Gamma parameters for the tricolor.

The method for determining the Gamma parameters for a display described herein calibrates the display of the standard image of gradient tricolor with multiple different Gamma values, which can obtain the optimal displaying results based on different calibration results. The optimal Gamma parameters for the tricolor corresponding to the brightness, which represent the optimal displaying results, are obtained based on the calibration results. By calibrating the displaying results of the displaying device with optimal Gamma parameters for the tricolor, the image quality is promoted to best represent the display quality of the displaying device.

### BRIEF DESCRIPTION OF DRAWINGS

Figure 1 shows a flow chart of the method for determining Gamma parameters for a display according to one of the embodiments.
Figure 2a-2c are schematic diagrams of standard images of gradient tricolor (red, green, and blue), respectively, according to one of the embodiments.
Figure 3 shows a flow chart for lightening the standard images of the gradient tricolor under the brightness shown in Figure 1.
Figure 4 shows a flow chart for obtaining the optical Gamma parameters for the tricolor corresponding to the brightness based on the calibration results according to a specific embodiment.
Figure 5 shows a chart representing the relationship between input signal and output light intensity under the brightness of 250cd/m² according to an embodiment.
Figure 6 shows a chart representing the relationship between input signal and output light intensity under the brightness of 300cd/m² according to an embodiment.
Figure 7 shows a chart representing the relationship between input signal and output light intensity under the brightness of 350cd/m² according to an embodiment.
Figure 8 shows a chart representing the relationship between input signal and output light intensity under the brightness of 400cd/m² according to an embodiment.
Figure 9 shows a chart representing the relationship between input signal and output light intensity under the brightness of 450cd/m² according to an embodiment.
Figure 10a-10b show the numbers of invisible gradient lines among gradient lines of each of the red, green and blue tricolor under different brightness corresponding to different Gamma values, respectively, on an AMOLED display.
Figure 11 shows a flow chart of the displaying method for a display according to one of the embodiments.
Figure 12 shows the structural diagram of the device for determining Gamma parameters according to one of the embodiments.
Figure 13 shows the structural diagram of the unit for lightening a standard image of gradient tricolor shown in Figure 12.
Figure 14 shows the structural diagram of the unit for obtaining the optimal Gamma parameters shown in Figure 12.
Figure 15 shows the structural diagram of the displaying device according to one of the embodiments.

### DETAILED DESCRIPTION

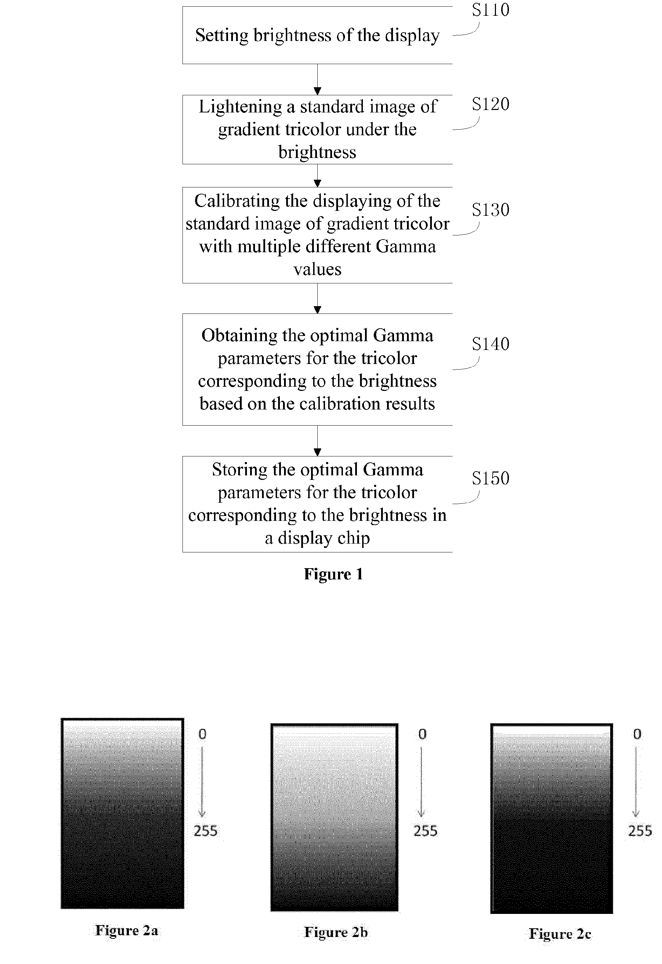

In one of the embodiments, as shown in Figure 1, a method for determining Gamma parameters for a display is provided, including the following steps.

Step S110, setting brightness of the display.

When the brightness of a display is altered, the Gamma value of the display must change accordingly to achieve the optimal displaying results. In this embodiment, the display screen is calibrated with multiple different Gamma values in order to select the optimal Gamma parameters corresponding to the brightness.

Step S120, lightening a standard image of gradient tricolor under the brightness.

As shown in Figures 2a to 2c, a standard image of gradient tricolor is an image showing each color of red (Figure 2a), green (Figure 2b), and blue (Figure 2c) as a strip having brightness from 0 to 255 in sequence. In this embodiment, the gradient image of tricolor is calibrated under multiple different Gamma values. Displaying results are recorded by recording the number of invisible gradient lines. To apply pre-set displaying results, the Gamma value corresponding to a specific number of invisible gradient lines is selected.

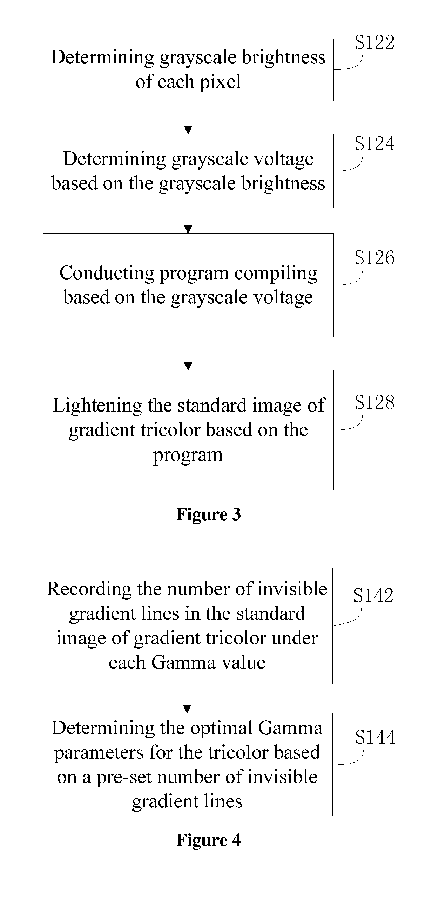

In a specific embodiment, as shown in Figure 3, lightening a standard image of gradient tricolor under the brightness including:
Step S122, determining the gray scale for each pixel.

A standard image of gradient tricolor by nature is an image showing strips of pixels arranged in sequence by the gray scale from 0 to 255, which is used to fully reveal the color resolution of a display.

Step S124, determining grayscale voltage based on the grayscale brightness.

The grayscale brightness is converted to grayscale voltage in order for a display to display the image.

Step S126, conducting program compiling based on the grayscale voltage.

The display control circuit is typically driven and controlled by a specific chip, wherein the drive program needs to be compiled based on the grayscale voltage of the pixels.

Step 128, lightening the standard image of gradient tricolor based on the program.

Displaying on a display can be achieved by applying a variety of grayscale voltages to the display via the compiled program. Lightening the display may be implemented usually using the method of matrix scanning drive circuit. A matrix scanning drive circuit includes row electrodes that link the back electrodes of a horizontal group of pixels and column electrodes that link the back electrodes of a vertical group of pixels. In a row of light-emitting pixels, columns needed in the current light emitting are connected to positive electrode, while columns not needed in light emitting are grounded. When the corresponding row electrode is grounded, the row pixels that are connected to positive electrodes all emit light, while the grounded pixels on the same row do not. This method is similar to CRT raster scanning, which periodically applies selective pulses to row electrodes while applies selective or non-selective drive pulses to column electrodes accordingly in order to realize the display function of all the display pixels in a row.

Step S130, calibrating the displaying of the standard image of gradient tricolor with multiple different Gamma values.

There is a non-linear relationship between the input and output signals of the display due to its special photoelectric effect. If the output photo signal of the display has an intensity of *L* and an input voltage of *U,* then their relationship can be represented by *L* = *kU^{γ},* whereas *k* is a constant and *γ* is the Gamma value of the display. Such a non-linear relationship is called Gamma calibration for a display. Serious distortion of brightness and chromaticity in output images may occur, if no calibration is performed for the input voltage and output photo signal intensity of a display.

Step S140, obtaining the optimal Gamma parameters for the tricolor based on the calibration results.

Gamma calibration is an important process for the display images to reflect the visual information of the original object or image as optimal as possible. Calibration with multiple different Gamma values can realize a variety of displaying results. The optimal Gamma parameters for the tricolor can be obtained based on the Gamma calibration results.

In a specific embodiment, as shown in Figure 4, the step of obtaining the optimal Gamma parameters for the tricolor based on the calibration results includes:
Step S 142, recording the number of invisible gradient lines in the standard image of gradient tricolor under each Gamma value.

As the number of invisible gradient lines in the standard image of gradient tricolor decreases, the resolution scale of a display for each color and the color gamut generated by combining the three colors increases. The displaying results of a display are also related to the number of invisible gradient lines. Usually, the number of invisible gradient lines corresponding to the optimal displaying results may be recorded manually as a reference for the display.

S 144, determining the optimal Gamma parameters for the tricolor based on a pre-set number of invisible gradient lines.

Specifically, to determine the optimal Gamma parameters for the tricolor based on a pre-set number of invisible gradient lines, set the optimal Gamma parameters for the tricolor to be the Gamma values for the tricolor corresponding to the standard image of gradient tricolor in which the number of invisible gradient lines is equal to the pre-set number of invisible gradient lines.

The displaying results of the display are determined manually, and the number of invisible gradient lines corresponding to the optimal displaying results is recorded. This particular number of invisible gradient lines serves as the pre-set number of invisible gradient lines. The optimal Gamma parameters for the tricolor based on different brightness can be determined using such a pre-set number of invisible gradient lines. The number of invisible gradient lines can be determined manually. However, of course, it can also be determined through image analysis to avoid individual variation in manual operations.

Step 150, storing the optimal Gamma parameters for the tricolor corresponding to the brightness in a display chip.

Lastly, the optimal Gamma parameters for each of the red, green, and blue colors under the brightness is obtained and stored in a display chip. In practice, when the brightness of the display is altered, the optimal Gamma parameters corresponding to the brightness is obtained from the display chip and employed in calibration of the displaying results of the displaying device in order to achieve the optimal displaying results thereof.

The method for determining the Gamma parameters for a display described herein calibrates the display of the standard image of gradient tricolor with multiple different Gamma values, which can obtain the optimal displaying results based on different calibration results. The optimal Gamma parameters for the tricolor corresponding to the brightness, which represent the optimal displaying results, are obtained based on the calibration results. By calibrating the displaying results of the displaying device with optimal Gamma parameters for the tricolor, the image quality is promoted to best represent the display quality of the displaying device.

The method for determining the Gamma parameters for a display described herein determines the optimal Gamma parameters for the tricolor corresponding to the display brightness based on the number of invisible gradient lines in the standard image of gradient tricolor. By calibrating the displaying results of the displaying device with the optimal Gamma parameters for the tricolor, the image quality is promoted to best represent the display quality of the displaying device.

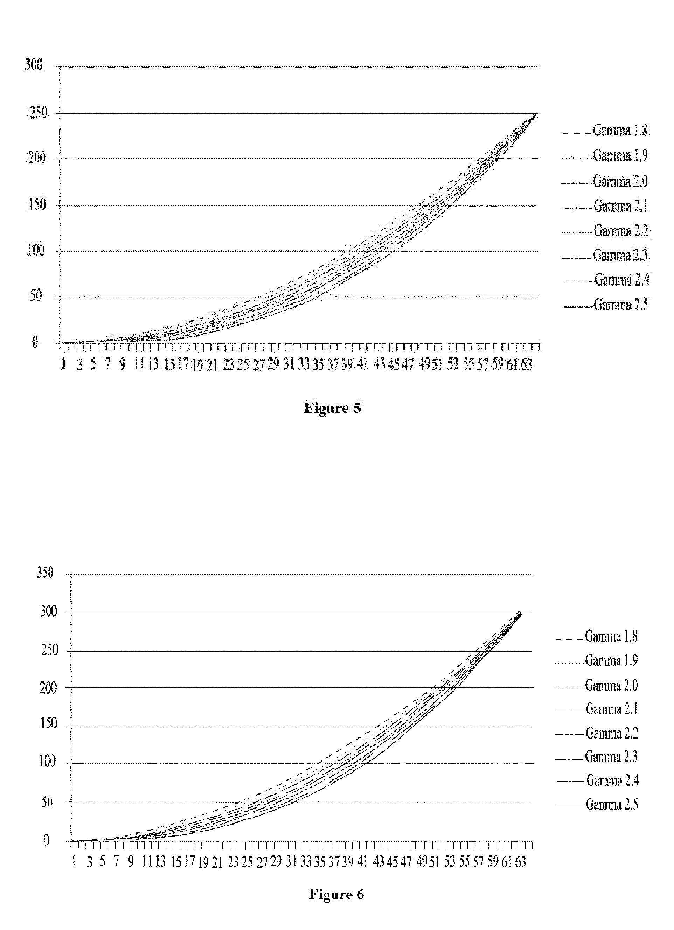

Some specific embodiments are shown in Figure 5, whereas the x-axis represents input signal intensity and the y-axis represents output light intensity. The numbers of each of the red, green, and blue invisible gradient lines under the brightness of 250cd/m² are recorded for an active-matrix organic display, respectively, where the tri-color Gamma value is 1.8. Similarly, the numbers of each of the red, green, and blue invisible gradient lines are recorded at Gamma values of 1.9, 2.0, 2.1, 2.2, 2.3, 2.4, and 2.5, respectively. The curves from top to bottom in Figure 5 represents Gamma values of 1.8, 1.9, 2.0, 2.1, 2.2, 2.3, 2.4, and 2.5, respectively.

As shown in Figure 6, the x-axis represents input signal intensity and the y-axis represents output light intensity. The numbers of each of the red, green, and blue invisible gradient lines under the brightness of 300cd/m² are recorded for an active-matrix organic display, respectively, where the tri-color Gamma value is 1.8. Similarly, the numbers of each of the red, green, and blue invisible gradient lines are recorded at Gamma values of 1.9, 2.0, 2.1, 2.2, 2.3, 2.4, and 2.5, respectively. The curves from top to bottom in Figure 6 represents Gamma values of 1.8, 1.9, 2.0, 2.1, 2.2, 2.3, 2.4, and 2.5, respectively.

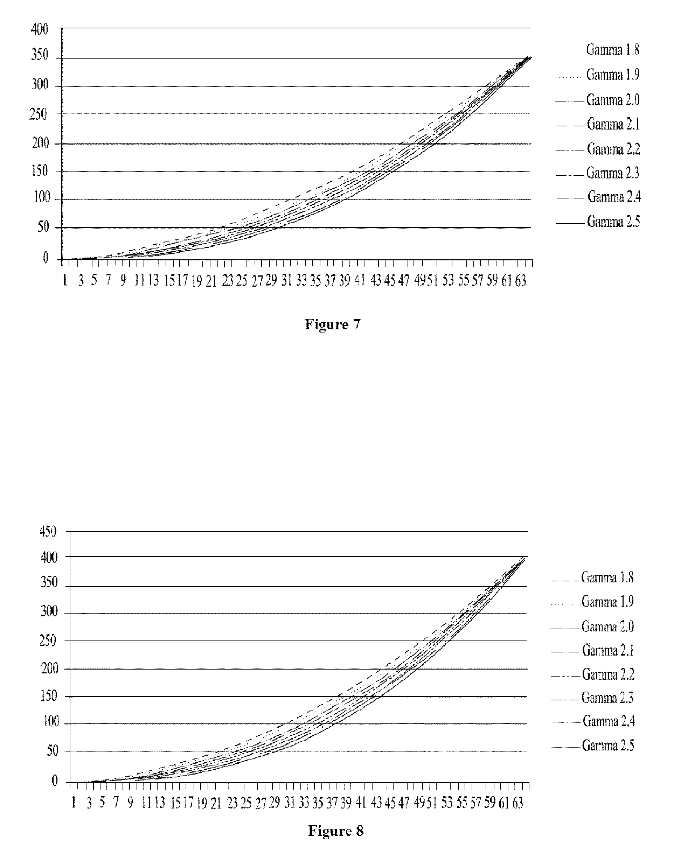

As shown in Figure 7, the x-axis represents input signal intensity and the y-axis represents output light intensity. The numbers of each of the red, green, and blue invisible gradient lines under the brightness of 350cd/m² are recorded for an active-matrix organic display, respectively, where the tri-color Gamma value is 1.8. Similarly, the numbers of each of the red, green, and blue invisible gradient lines are recorded at Gamma values of 1.9, 2.0, 2.1, 2.2, 2.3, 2.4, and 2.5, respectively. The curves from top to bottom in Figure 7 represents Gamma values of 1.8, 1.9, 2.0, 2.1, 2.2, 2.3, 2.4, and 2.5, respectively.

As shown in Figure 8, the x-axis represents input signal intensity and the y-axis represents output light intensity. The numbers of each of the red, green, and blue invisible gradient lines under the brightness of 400cd/m² are recorded for an active-matrix organic display, respectively, where the tri-color Gamma value is 1.8. Similarly, the numbers of each of the red, green, and blue invisible gradient lines are recorded at Gamma values of 1.9, 2.0, 2.1, 2.2, 2.3, 2.4, and 2.5, respectively. The curves from top to bottom in Figure 8 represents Gamma values of 1.8, 1.9, 2.0, 2.1, 2.2, 2.3, 2.4, and 2.5, respectively.

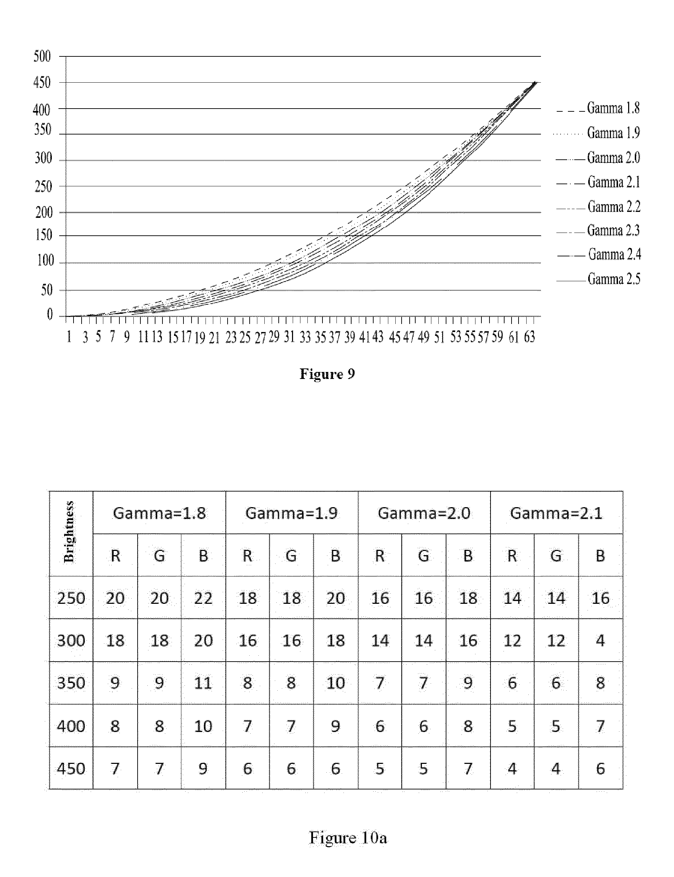

As shown in Figure 9, the x-axis represents input signal intensity and the y-axis represents output light intensity. The numbers of each of the red, green, and blue invisible gradient lines under the brightness of 450cd/m² are recorded for an active-matrix organic display, respectively, where the tri-color Gamma value is 1.8. Similarly, the numbers of each of the red, green, and blue invisible gradient lines are recorded at Gamma values of 1.9, 2.0, 2.1, 2.2, 2.3, 2.4, and 2.5, respectively. The curves from top to bottom in Figure 9 represents Gamma values of 1.8, 1.9, 2.0, 2.1, 2.2, 2.3, 2.4, and 2.5, respectively.

It can be understood by a person skilled in the art that the range of display brightness in the present application is not in any way limited to be between 250cd/m² and 450cd/m² and the intervals in between can be narrower. The range of Gamma values described herein is not in any way limited to be between 1.8 and 2.5. The intervals for Gamma values can also be smaller.

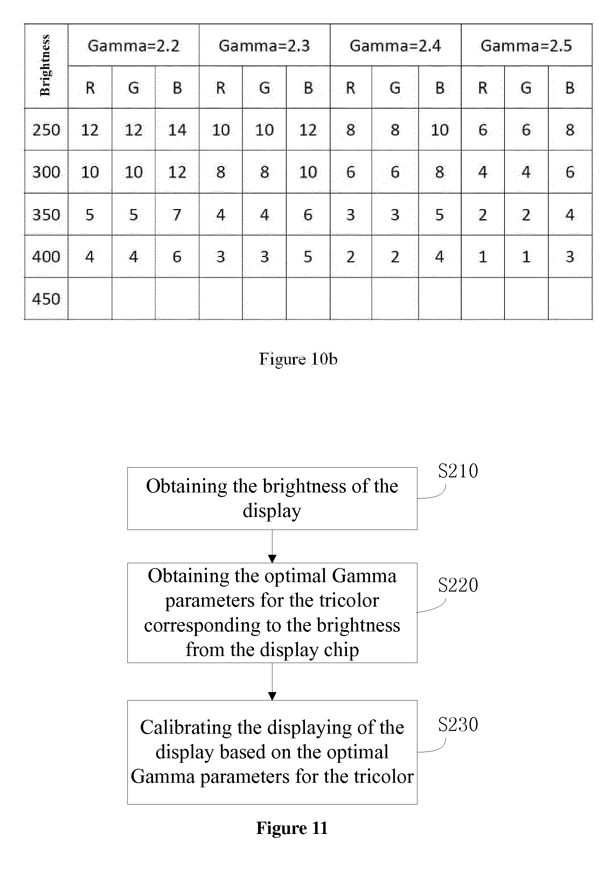

As shown in Figures 10a and 10b, the optimal Gamma parameters for red, green, and blue colors under certain brightness can be determined based on the displaying results. For example, with invisibility of the six gradient lines as a criterion, at the brightness of 250cd/m², let Gamma =2.5 for R fundamental color, Gamma =2.5 for G fundamental color, and Gamma =2.6 for B fundamental color. At the brightness of 300 cd/m², let Gamma =2.4 for R fundamental color, Gamma =2.4for G fundamental color, and Gamma =2.5 for B fundamental color. At the brightness of 350 cd/m², let Gamma =2.1 for R fundamental color, Gamma =2.1 for G fundamental color, and Gamma =2.3 for B fundamental color. At the brightness of 400 cd/m², let Gamma =2.0 for R fundamental color, Gamma =2.0 for G fundamental color, and Gamma =2.2 for B fundamental color. At the brightness of 450 cd/m², let Gamma =1.9 for R fundamental color, Gamma =1.9 for G fundamental color, and Gamma =1.9 for B fundamental color.

It would be understood that the pre-set number of invisible gradient lines described herein is not necessarily 6. Different displaying results can be achieved by setting different the pre-set number of invisible gradient lines. The pre-set number of invisible gradient lines may be customized to different values as needed.

Finally, the numbers of each of the red, green, and blue invisible gradient lines corresponding to different Gamma values for an AMOLED display may be recorded in a display chip. In use, when the user adjusts the brightness, the optimal Gamma parameters for the tricolor can be obtained according to the brightness, so that the best displaying results can be achieved for the AMOLED display.

In one of the embodiments, as shown in Figure 11, a displaying method for a displaying device is provided, including the following steps.

Step S210, obtaining the display brightness.

By obtaining the display brightness and the corresponding optimal Gamma parameters, the best displaying results can be achieved.

S220, obtaining the optimal Gamma parameters for the tricolor corresponding to the brightness from the display chip.

The optimal Gamma parameters for the tricolor corresponding to the brightness are determined based on the number of invisible gradient lines in the standard image of gradient tricolor. More specifically, it may include the following steps: lightening the standard image of gradient tricolor under the brightness; calibrating the displaying of the standard image of gradient tricolor with multiple different Gamma values; and obtaining the optimal Gamma parameters for the tricolor corresponding to the brightness based on the calibration results.

The step of obtaining the optimal Gamma parameters for the tricolor corresponding to the brightness based on the calibration results may include: recording the number of invisible gradient lines in the standard image of gradient tricolor under each Gamma value; and determining the optimal Gamma parameters for the tricolor based on a pre-set number of invisible gradient lines. Specifically, the step of determining the optimal Gamma parameters for the tricolor based on a pre-set number of invisible gradient lines may be setting the optimal Gamma parameters for the tricolor to be the Gamma values for the tricolor corresponding to the standard image of gradient tricolor in which the number of invisible gradient lines is equal to the pre-set number of invisible gradient lines.

Step S230, calibrating the displaying of the displaying device based on the optimal Gamma parameters for the tricolor.

The displaying device can be calibrated with the optimal Gamma parameters for the tricolor corresponding to the brightness stored in a display chip in order to generate the best displaying results.

By calibrating the displaying results of the displaying device with the optimal Gamma parameters for the tricolor, the image quality is promoted to best represent the display quality of the displaying device.

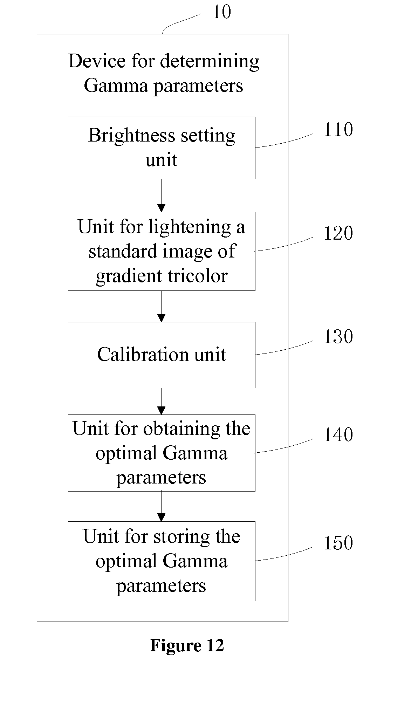

In one of the embodiments, as shown in Figure 12, a device 10 for determining Gamma parameters for a display, which may include: a brightness setting unit 110; a unit 120 for lightening a standard image of gradient tricolor; a calibration unit 130; a unit 140 for obtaining the optimal Gamma parameters for the tricolor; and a unit 150 for storing the optimal Gamma parameters for the tricolor.

The brightness setting unit 110 is configured to set the brightness of the display. The unit 120 for lightening a standard image of gradient tricolor is configured to lighten a standard image of gradient tricolor under the brightness. The standard image of gradient tricolor is an image showing each color of red, green and blue as a strip having brightness arranged successively from 0 to 255 in sequence. The calibration unit 130 is configured to calibrate the display of the standard image of gradient tricolor with multiple different Gamma values. The unit 140 for obtaining the optimal Gamma parameters for the tricolor is configured to obtain the optimal Gamma parameters for the tricolor corresponding to the brightness based on the calibration results. The unit 150 for storing the optimal Gamma parameters for the tricolor is configured to store the optimal Gamma parameters for the tricolor corresponding to the brightness in a display chip.

The device 10 for determining the Gamma parameters for a display described herein calibrates the display of the standard image of gradient tricolor with multiple different Gamma values, which can obtain the optimal displaying results based on different calibration results. The optimal Gamma parameters for the tricolor corresponding to the brightness, which represent the optimal displaying results, are obtained based on the calibration results.

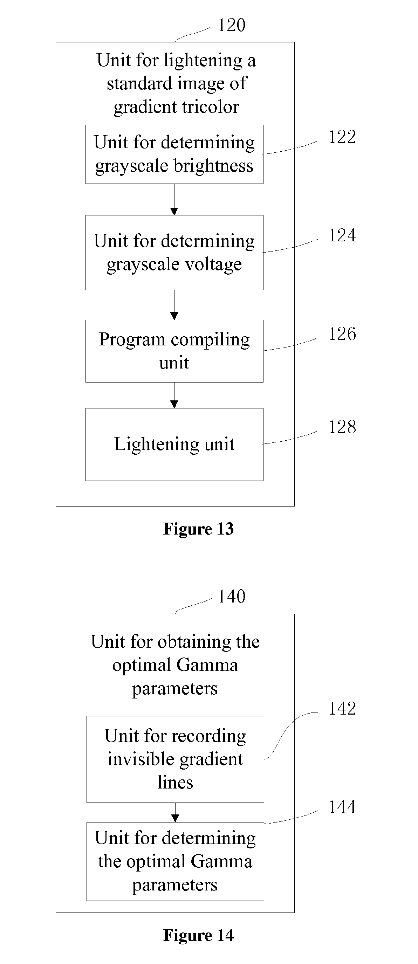

In one of the embodiments, as shown in Figure 13, the unit 120 for lightening a standard image of gradient tricolor may include: a unit 122 for determining grayscale brightness; a unit 124 for determining grayscale voltage; a program compiling unit 126; and a lightening unit 128.

The unit 122 for determining grayscale brightness is configured to determine the grayscale brightness of each pixel. The unit 124 for determining grayscale voltage is configured to determine the grayscale voltage based on the grayscale brightness. The program compiling unit 126 is configured to conduct program compiling based on the grayscale voltage. The lightening unit 128 is configured to lighten the standard image of gradient tricolor based on the program. Lightening the display may be implemented usually with the method of matrix scanning drive circuit. A matrix scanning drive circuit includes row electrodes that link the back electrodes of a horizontal group of pixels and column electrodes that link the back electrodes of a vertical group of pixels. In a row of light-emitting pixels, columns needed in the current light emitting are connected to positive electrode, while columns not needed in light emitting are grounded. When the corresponding row electrode is grounded, the row pixels that are connected to positive electrodes all emit light, while the grounded pixels on the same row do not. This method is similar to CRT raster scanning, which periodically applies selective pulses to row electrodes while applies selective or non-selective drive pulses to column electrodes accordingly in order to realize the display function of all the display pixels in a row.

In one of the embodiments, as shown in Figure 14, the unit 140 for obtaining the optimal Gamma parameters may include: a unit 142 for recording invisible gradient lines; and a unit 144 for determining the optimal Gamma parameters.

The unit 142 for recording invisible gradient lines is configured to record the number of invisible gradient lines under each Gamma value. The unit 144 for determining the optimal Gamma parameters for the tricolor is configured to determine the optimal Gamma parameters for the tricolor based on a pre-set number of invisible gradient lines. Specifically, the unit 144 for determining the optimal Gamma parameters may set the optimal Gamma parameters for the tricolor to be the Gamma values of the standard image of gradient tricolor in which the number of invisible gradient lines is equal to the pre-set number of invisible gradient lines as the optimal Gamma parameters for the tricolor.

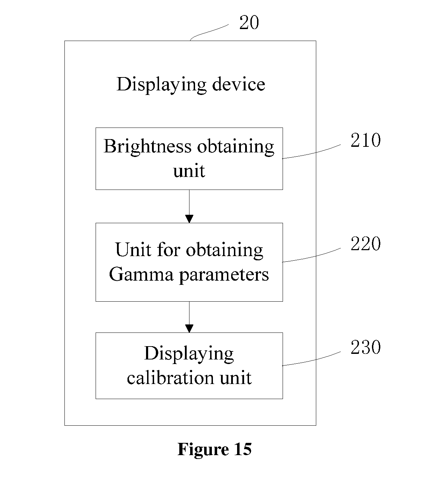

In one of the embodiments, as shown in Figure 15, a displaying device 20 is provided, which may include: a brightness obtaining unit 210; a unit for obtaining Gamma parameters 220; and a displaying calibration unit 230.

The brightness obtaining unit 210 is configured to obtain the brightness of the displaying device. The Unit for obtaining Gamma parameters 220 is configured to obtain the optimal Gamma parameters for the tricolor corresponding to the brightness from the display chip. The displaying calibration unit 230 is configured to calibrate the display of the displaying device based on the optimal Gamma parameters for the tricolor. Specifically, the optimal Gamma parameters for the tricolor corresponding to the brightness are determined based on the number of invisible gradient lines in the standard image of gradient tricolor. The displaying device 20 as described herein obtains the optimal Gamma parameters corresponding to the brightness via the unit for obtaining Gamma parameters 220, and calibrates the displaying results of the displaying device via the calibration unit 230, promoting the image quality to represent the display quality of the displaying device.

The detailed embodiments described herein are only for the purpose of illustrating the present invention, and are not intended to limit the scope of the present invention in any way. It would be understand by a person skilled in the art that various changes and modifications can be made to the embodiments described herein without departing from the scope and spirit of the present invention. Such changes and modifications are contemplated by the present invention, the scope of which should only be defined by the following claims.

## Claims

1. A method for determining Gamma parameters for a display, comprising:
setting brightness of the display;
lightening a standard image of gradient tricolor under the brightness;
calibrating the displaying of the standard image of gradient tricolor with multiple different Gamma values;
obtaining the optimal Gamma parameters for the tricolor corresponding to the brightness based on the calibration results; and
storing the optimal Gamma parameters for the tricolor corresponding to the brightness in a display chip.

2. The method for determining Gamma parameters for a display of claim 1, wherein the standard image of gradient tricolor is an image showing each color of red, green and blue as a strip having brightness from 0 to 255 in sequence.

3. The method for determining Gamma parameters for a display of claim 1, wherein the lightening a standard image of gradient tricolor under the brightness comprises:
determining grayscale brightness of each pixel;
determining grayscale voltage based on the grayscale brightness;
conducting program compiling based on the grayscale voltage; and
lightening the standard image of gradient tricolor based on the program.

4. The method for determining Gamma parameters for a display of claim 1, wherein the obtaining the optimal Gamma parameters for the tricolor corresponding to the brightness based on the calibration results comprises:
recording the number of invisible gradient lines in the standard image of gradient tricolor under each Gamma value; and
determining the optimal Gamma parameters for the tricolor based on a pre-set number of invisible gradient lines.

5. The method for determining Gamma parameters for a display of claim 4, wherein the determining the optimal Gamma parameters for the tricolor based on a pre-set number of invisible gradient lines comprises setting Gamma values corresponding to the standard image of gradient tricolor in which the number of invisible gradient lines is equal to the pre-set number of invisible gradient lines as the optimal Gamma parameters for the tricolor.

6. The method for determining Gamma parameters for a display of claim 5, wherein the display brightness is set as 250cd/m², 300cd/m², 350cd/m², 400cd/m², and 450cd/m², respectively; the multiple different Gamma values are set to be 1.8, 1.9, 2.0, 2.1, 2.2, 2.3, 2.4, and 2.5 under each brightness, respectively; and the pre-set number of invisible gradient lines is 6.

7. A device for determining Gamma parameters for a display, comprising:
a brightness setting unit, configured to set brightness of the display;
a unit for lightening a standard image of gradient tricolor, configured to lighten a standard image of gradient tricolor under the brightness;
a calibration unit, configured to calibrate the display of the standard image of gradient tricolor with multiple different Gamma values;
a unit for obtaining the optimal Gamma parameters, configured to obtain the optimal Gamma parameters for the tricolor corresponding to the brightness based on the calibration results; and
a unit for storing the optimal Gamma parameters, configured to store the optimal Gamma parameters for the tricolor corresponding to the brightness in a display chip.

8. The device for determining Gamma parameters for a display of claim 7, wherein the standard image of gradient tricolor is an image showing each color of red, green and blue as a strip having brightness from 0 to 255 in sequence.

9. The device for determining Gamma parameters for a display of claim 7, wherein the unit for lightening a standard image of gradient tricolor comprises:
a unit for determining grayscale brightness, configured to determine grayscale brightness of each pixel;
a unit for determining grayscale voltage, configured to determine grayscale voltage based on the grayscale brightness;
a program compiling unit, configured to conduct program compiling based on the grayscale voltage; and
a lightening unit, configured to lighten the standard image of gradient tricolor based on the program.

10. The device for determining Gamma parameters for a display of claim 7, wherein the unit for obtaining the optimal Gamma parameters comprises:
a unit for recording invisible gradient lines, configured to record the number of invisible gradient lines in the standard image of gradient tricolor under each Gamma value; and
a unit for determining the optimal Gamma parameters, configured to determine the optimal Gamma parameters for the tricolor based on a pre-set number of invisible gradient lines.

11. The device for determining Gamma parameters for a display of claim 10, wherein the unit for determining the optimal Gamma parameters sets the optimal Gamma parameters for the tricolor to be the Gamma values corresponding to the standard image of gradient tricolor in which the number of invisible gradient lines is equal to the pre-set number of invisible gradient lines as the optimal Gamma parameters for the tricolor.

12. A displaying method for a display, comprising:
obtaining the brightness of the display;
obtaining the optimal Gamma parameters for the tricolor corresponding to the brightness from the display chip; and
calibrating the displaying of the display based on the optimal Gamma parameters for the tricolor.

13. The displaying method for a display of claim 12, wherein the optimal Gamma parameters for the tricolor corresponding to the brightness are determined based on the number of invisible gradient lines in the standard image of gradient tricolor.

14. The displaying method for a display of claim 13, wherein the determining the optimal Gamma parameters for the tricolor corresponding to the brightness based on the number of invisible gradient lines in the standard image of gradient tricolor comprises:
lightening the standard image of gradient tricolor under the brightness;
calibrating the displaying of the standard image of gradient tricolor with multiple different Gamma values; and
obtaining the optimal Gamma parameters for the tricolor corresponding to the brightness based on the calibration results.

15. The displaying method for a display of claim 14, wherein the obtaining the optimal Gamma parameters for the tricolor corresponding to the brightness based on the calibration results comprises:
recording the number of invisible gradient lines in the standard image of gradient tricolor under each Gamma value; and
determining the optimal Gamma parameters for the tricolor based on a pre-set number of invisible gradient lines.

16. The displaying method for a display of claim 15, wherein the determining the optimal Gamma parameters based on a pre-set number of invisible gradient lines comprises setting the optimal Gamma parameters for the tricolor to be the Gamma values for the tricolor corresponding to the standard image of gradient tricolor in which the number of invisible gradient lines is equal to the pre-set number of invisible gradient lines.

17. A displaying device, comprising:
a brightness obtaining unit, configured to obtain brightness of a display;
a unit for obtaining Gamma parameters, configured to obtain the optimal Gamma parameters for the tricolor corresponding to the brightness from a display chip; and
a displaying calibration unit, configured to calibrate the displaying of the displaying device based on the optimal Gamma parameters for the tricolor.

18. The displaying device of claim 17, wherein the optimal Gamma parameters for the tricolor corresponding to the brightness are determined based on the number of invisible gradient lines in the standard image of gradient tricolor.
